# EUROPEAN PATENT APPLICATION

(11) **EP 4 491 689 A1**
(43) Date of publication of application: **15.01.2025**
(21) Application number: 23184868.0
(22) Date of filing: 11.07.2023
(51) Int. Cl.: C09D 183/08, C09D 5/00

(54) **HYDROPHOBIC COATINGS FOR GLASS SUBSTRATES**

(30) Priority: 10.07.2023 PT 2023118812
(71) Applicant: Chemitek - Química Avançada, S.A, 4740-010 Esposende (PT)
(72) Inventor: DE SÁ MARTINS, CÉSAR ANDRÉ, 4905-016 ALDREU (PT)
(74) Representative: Patentree

(57) **Abstract**

The present description refers to new coatings for substrates. Namely the application of the coatings on substrates of glass, acrylic, metal or combinations thereof, with anti-soiling, anti-graffiti, and/or anti-corrosion agent action, particularly for increasing the yield of solar panels/solar cells. Application methods and respective uses are also described in the present disclosure.

## Description

### Technical field

The present disclosure refers to coatings for substrates, namely the application of hydrophobic coatings on substrates of glass, acrylic, metal, or combinations thereof, particularly panels, preferably solar panels or solar cells, application methods and respective uses.

### Background

The lack of cleaning of urban surfaces poses not only an aesthetic problem but can also cause functional problems. Examples of this are surfaces stained with paint due to vandalism, such as windows of public transports, buildings, or even solar panels.

The accumulation of dust and other particles can also have the same effect, especially on the yield of solar panels. This equipment, because they are placed in the horizontal or with low inclination relatively to the ground, easily accumulate dirt, rainwater, animals, among others, which causes a decrease in the harnessing of solar energy and, consequently, a loss of efficiency in energy production. Therefore, panels need maintenance, especially regular washing to remove accumulated dirt. As has been verified, after six months, solar panels lose around 50% of their efficiency due to the dirt and particles that accumulate (Adinoyi MJ, Said SAM. Effect of dust accumulation on the power outputs of solar photovoltaic modules, Elsevier J Renew Energy 2013:633-6).

To overcome this problem there are already in the prior art some solar panel coatings in order to increase the efficiency of this renewable energy source. However, the existing coatings are not very effective, in that they allow dirt to accumulate on the panels and/or require frequent washing to keep the panels functional. Generally, these coatings contain titanium oxide, both hydrophobic and hydrophilic, which makes self-cleaning extremely slow. Titanium oxide, TiO₂, due to its reactivity, degrades organic compounds, but cannot degrade and remove inorganic deposits, which make up most of the dirt on solar park panels and in desert areas, such as dust, sand, among others. In this way, the effect of TiO₂ presence on the coating of the panels is practically null.

WO2020261121 describes a hydrophobic coating composition for solar panels, which prevents dirt accumulation on the surface of the panels, thereby increasing the effectiveness of solar energy harnessing. The composition ensures the effectiveness of solar panels for up to several years, with minimal maintenance, thus reducing washing and maintenance costs. However, the document does not mention any application in preventing damage caused by paint, such as graffiti.

WO2006032778 describes a gel coat composition for obtaining anti-graffiti coatings comprising at least one acrylic monomer derived from bisphenol A; an organic carboxylic acid comprising a carbon-carbon double bond in resonance with the carbon-oxygen double bond of the carboxyl group; a radical catalyst; and a mineral filler comprising at least one hydroxyl group. However, the composition described does not allow for a direct application on the surface to be protected, requiring the use of a mould to obtain the gel coating.

US 2016/0083620 describes an anti-reflection coating composition based on polysilsesquioxane, as well as an article coated with said composition. The self-cleaning properties are provided by the extremely fine porosity that minimises dirt deposition by physical means and/or by a low energy surface that resists chemical and physical interactions and facilitates particle displacement, thus rendering the surfaces essentially dirt.

These facts are described in order to illustrate the technical problem to be solved by the present invention.

### General Description

The present description refers to new coatings for substrates. Namely the application of the coatings on substrates of glass, acrylic, metal, or combinations thereof, with anti-soiling, anti-graffiti, and/or anti-corrosion agent action, particularly for increasing the yield of solar panels/solar cells. Application methods and respective uses are also described in the present disclosure.

The present disclosure describes a composition for hydrophobic coating of surfaces comprising: a solvent selected from the following list: water, butylglycol, ethanol, alcohol, or mixtures thereof; and an active compound selected from the following list: siloxanes and silicones, 3-[(2-aminoethyl)amino]propyl Me, di-Me, methoxy-terminated (CAS No: 102782-92-3); aqueous emulsion from 1 to 10% (w/w) of amino-polysiloxane; a mixture of at least two of the following compounds: siloxanes and silicones, 3-[(2-aminoethyl)amino]propyl Me, di-Me, methoxy-terminated (CAS No: 102782-92-3), siloxanes and silicones, 3-[(2-aminoethyl)amino]propyl Me, di-Me, hydroxy-terminated (CAS No: 75718-16-0), or siloxanes and silicones, 3-[(2-aminoethyl)amino]propyl Me, di-Me (CAS No: 71750-79-3); or mixtures thereof.

The present disclosure can surprisingly be used for substrate coating, particularly glass, with anti-adhesive, anti-graffiti, anti-soiling properties, and also for increasing the yield of solar panels and/or cells.

The present disclosure can surprisingly be used for substrate coating, particularly glass, with anti-adhesive, anti-graffiti, anti-soiling properties, preferably for using on window glass or other applications.

For the scope and interpretation of the present disclosure, the term "anti-graffiti" is defined as the property of preventing the adhesion of paint, particularly graffiti paint, to surfaces such as glass, metal, acrylic, among others.

In an embodiment for best results, the composition comprises: 0.1 to 50 % (w/w) of active compound; and 40 to 99 % (w/v) of solvent.

In another embodiment for best results, the composition comprises: 1 to 50 % (w/w) of active compound; and 40 to 99 % (w/v) of solvent.

In yet another embodiment for best results, the composition comprises: 5 to 40 % (w/w) of active compound; and 60 to 90 % (w/v) of solvent.

In an embodiment for best results, the amino-polysiloxane is poly(oxy-1,2-ethanediyl), alpha-isotridecyl-omega-hydroxy (CAS No: 9043-30-5).

In an embodiment for best results, the concentration of amino-polysiloxane in the emulsion ranges between 1 to 5% (w/w).

In an embodiment for best results, the composition further comprises: 1 to 10% (w/v) of a surfactant; preferably a non-ionic, cationic, anionic surfactant, or mixtures thereof. In an embodiment, the surfactant is an ethoxylated C9-11 alcohol, preferably an ethoxylated C10 alcohol.

In an embodiment for best results, the composition further comprises from 0.1 to 5 % (w/v) of preservative, preferably from 0.2 to 1% (w/v) of preservative. In an embodiment the preservative is selected from the following list: benzalkonium chloride, didecyldimethylammonium chloride, methylisothiazolinone, isothiazolinone. Preferably, the preservative is a mixture of methylisothiazolinone and isothiazolinone.

In an embodiment for best results, the composition comprises:
10 - 40 % (w/v) of siloxanes and silicones, 3-[(2-aminoethyl)amino]propyl Me, di-Me, methoxy-terminated; preferably 10 - 30 % (w/v);
20 - 60% (w/v) of butylglycol; preferably 30 - 50% (w/v);
1 - 5 % (w/v) of ethoxylated C9-11 alcohol, preferably ethoxylated C10 alcohol; preferably 2 - 3 % (w/v);
0.1 - 2 % (w/v) of preservative, preferably 0.2 - 0.5 % (w/v); and
water up to 100% (w/v).

In another embodiment for best results, the composition comprises:
1 - 15 % (w/v) of aqueous emulsion from 1 to 10% (w/w) of amino-polysiloxane; preferably 5 - 10 % (w/v)
1 - 8 % (w/v) ethoxylated C9-11 alcohol, preferably 2 - 5 % (w/v); more preferably ethoxylated C10 alcohol;
0.1 - 2 % (w/v) of preservative, preferably 0.2 - 0.5 % (w/v); and
water up to 100% (w/v).

In yet another embodiment for best results, the composition comprises:
0.5 - 10 % (w/v) of siloxanes and silicones, 3-[(2-aminoethyl)amino]propyl Me, di-Me, methoxy-terminated; preferably 1- 5 % (w/v);
10 - 30 % (w/v) of alcohol; preferably 15 - 20 % (w/v);
1 - 10 % (w/v) of butylglycol; preferably 5 - 7.5 % (w/v);
0.1 - 2 % (w/v) of preservative, preferably 0.2 - 0.5 % (w/v); and
water up to 100 % (w/v).

In another embodiment for best results, the composition comprises:
0.1% - 0.5% (w/v) of siloxanes and silicones, 3-[(2-aminoethyl)amino]propyl Me, di-Me;
3% - 10% (w/v) of siloxanes and silicones, 3-[(2-aminoethyl)amino]propyl Me, di-Me, hydroxy-terminated;
10 - 30 % (w/v) of alcohol; preferably 15 - 20 % (w/v);
1 - 10 % (w/v) of butylglycol; preferably 5 - 7.5 % (w/v);
0.1 - 2 % (w/v) of preservative; preferably 0.2 - 0.5 % (w/v); and
water up to 100% (w/v).

In another embodiment for best results, the composition comprises:
0.1% - 0.5% (w/v) of siloxanes and silicones, 3-[(2-aminoethyl)amino]propyl Me, di-Me methoxy-terminated;
3% - 10% (w/v) of siloxanes and silicones, 3-[(2-aminoethyl)amino]propyl Me, di-Me, hydroxy-terminated;
10 - 30 % (w/v) of alcohol; preferably 15 - 20 % (w/v);
1 - 10 % (w/v) of butylglycol; preferably 5 - 7.5 % (w/v);
0.1 - 2 % (w/v) of preservative; preferably 0.2 - 0.5 % (w/v); and
water up to 100% (w/v).

In an embodiment for best results, the alcohol is selected from a list comprising: ethanol, 1-propanol, 2-propanol, 1-butanol, 2-butanol, isopropanol, and mixtures thereof.

An aspect of the present disclosure comprises an anti-graffiti coating and/or anti-corrosion agent comprising the composition described in the present disclosure.

An aspect of the present disclosure comprises a paint comprising the composition described in the present disclosure.

An aspect of the present disclosure comprises the use of the described composition as a dirt repelling agent, as a hydrostatic and hydrophobic agent, as an anti-graffiti agent, and/or anti-corrosion agent. Particularly, for use as a yield enhancer of a solar panel or a solar cell.

The present disclosure further describes articles comprising the composition described. In an embodiment, the article is made of glass, metal, acrylic or combinations thereof. In another embodiment, the article is a solar cell or a solar panel.

### Brief description of the drawings

For an easier understanding, figures are herein attached, which represent preferred embodiments that, however, do not intend to limit the object of the present description.
**Figure 1****:** Representation of an embodiment of the transmittance results (%) of glasses treated with Example 1 of the composition described in the present disclosure, before (Control) and after being subjected to different stress tests: immersion in alkaline solution (pH 8), immersion in acid solution (pH 4), immersion in ionic solution (Ionic solution), exposure to ultraviolet rays (UV), exposure to high temperatures (T=+120 °C), exposure to low temperatures (T=-20 °C), immersion in alcohol, immersion in water.
**Figure 2****:** Representation of an embodiment of the transmittance results (%) of glasses treated with Example 2 of the composition described in this disclosure, before (Control) and after being subjected to different stress tests: immersion in alkaline solution (pH 8), immersion in acid solution (pH 4), immersion in ionic solution (Ionic solution), exposure to ultraviolet rays (UV), exposure to high temperatures (T=+120 °C), exposure to low temperatures (T=-20 °C), immersion in alcohol, immersion in water.
**Figure 3****:** Representation of an embodiment of the transmittance results (%) of glasses treated with Example 3 of the composition described in this disclosure, after being subjected to different stress tests: immersion in alkaline solution (pH 8), immersion in acid solution (pH 4), immersion in ionic solution (Ionic solution), exposure to ultraviolet rays (UV), exposure to high temperatures (T=+120 °C), exposure to low temperatures (T=-20 °C), immersion in alcohol, immersion in water.
**Figure 4****:** Representation of an embodiment of the transmittance results (%) of glasses treated with Example 4 of the composition described in this disclosure, after being subjected to different stress tests: immersion in alkaline solution (pH 8), immersion in acid solution (pH 4), immersion in ionic solution (Ionic solution), exposure to ultraviolet rays (UV), exposure to high temperatures (T=+120 °C), exposure to low temperatures (T=-20 °C), immersion in alcohol, immersion in water.
**Figure 5****:** Representative image of an untreated glass surface, after being painted with acrylic paint.
**Figure 6****:** Representative image of a glass surface treated with Example 1 of the composition described in this disclosure, after being painted with acrylic paint.
**Figure 7****:** Representative image of a glass surface treated with Example 2 of the composition described in this disclosure, after being painted with acrylic paint.
**Figure 8****:** Representative image of a glass surface treated with Example 3 of the composition described in this disclosure, after being painted with acrylic paint.
**Figure 9****:** Representative image of a glass surface treated with Example 4 of the composition described in this disclosure, after being painted with acrylic paint.
**Figure 10****:** Representative image of a glass surface treated with Example 5 (comparative example), after being painted with acrylic paint.
**Figure 11****:** Representative image of stainless steel plates after 28 days immersed in salt water. (A) Plate coated with Example 4. (B) Control plate, without any coating.
**Figure 12****:** Representative image of stainless steel plates after 28 days immersed in salt water. (A) Control plate, without any coating. (B) Plate coated with Example 4.
**Figure 13****:** Representative image of the corrosion resistance test results on a galvanised steel surface. Sample 1 - sample coated with Example 4 and immersed continuously in salt water for 144 h, 168 h, 216 h and 312 h; Sample 2 - sample coated with Example 4, immersed in salt water for 144 h, 168 h, 216 h and 312 h, with 1 h of air exposure per day; Control sample - uncoated galvanized steel immersed in salt water for 144 h, 168 h, 216 hand 312 h.
**Figure 14****:** Representative image of the corrosion resistance test results on a copper finished aluminium surface. Sample 1 - sample coated with Example 4 and immersed continuously in salt water for 144 h, 168 h, 216 h and 312 h; Sample 2 - sample coated with Example 4, immersed in salt water for 144 h, 168 h, 216 h and 312 h, with 1 h of air exposure per day; Control sample - uncoated copper finished aluminium surface immersed in salt water for 144 h, 168 h, 216 h and 312 h.
**Figure 15****:** Representative image of the corrosion resistance test results on an aluminium surface. Sample 1 - sample coated with Example 4 and immersed continuously in salt water for 144 h, 168 h, 216 h and 312 h; Sample 2 - sample coated with Example 4, immersed in salt water for 144 h, 168 h, 216 h and 312 h, with 1 h of air exposure per day; Control sample - uncoated aluminium surface immersed in salt water for 144 h, 168 h, 216 h and 312 h.

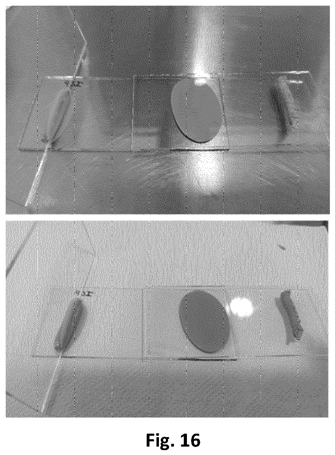

**Figure 16****:** Representative image of glass surfaces coated with Example 4, with silicone application.

### Detailed description

The present disclosure refers to compositions for hydrophobic coatings of surfaces. Namely the application of the coatings on substrates of glass, acrylic, metal or combinations thereof, with anti-soiling, anti-graffiti, and/or anti-corrosion agent action, particularly for anti-graffiti protection, anti-dirt glass protection, and to increase the yield of solar panels/solar cells. Application methods and respective uses are also described in the present disclosure.

The present disclosure describes a substrate coating composition, preferably a glassy or metallic substrate, comprising an active compound selected from the following list: siloxanes and silicones, 3-[(2-aminoethyl)amino]propyl Me, di-Me, methoxy-terminated; aqueous emulsion from 1 to 10% (w/w) of amino-polysiloxane; mixture of siloxanes and silicones, 3-[(2-aminoethyl)amino]propyl Me, di-Me, methoxy-terminated and siloxanes and silicones, 3-[(2-aminoethyl)amino]propyl Me, di-Me, hydroxy-terminated; or mixtures thereof; and a solvent selected from the following list: water, butylglycol, ethanol, alcohol, or mixtures thereof.

The present disclosure is particularly described using preferred embodiments. Therefore, the disclosure is not limited only to the descriptions and illustrations provided. These are used so that the disclosure is sufficiently detailed and comprehensive. Furthermore, the intent of the drawings is for illustrative purposes and not for limiting purposes.

The present disclosure can surprisingly be used for substrate coating, particularly glass, with anti-adhesive, anti-graffiti, anti-soiling properties, preferably to increase the yield of solar panels and/or cells, or use in glass for windows or other applications.

In an embodiment, the coatings of the present disclosure surprisingly clean and protect surfaces from dirt, making them anti-adherent, with dirt repellence, surprisingly increasing the yield of solar panels. Likewise, the application of the described composition prevents the adhesion of dirt (sand, soil, among others), and the adhesion of paint, particularly graffiti paint, to surfaces, making cleaning easier. Other surfaces such as metals (stainless steel, galvanised steel, aluminium, copper, etc.) can also be protected with this type of coating, protecting them from scratches and oxidation.

In an embodiment, the films of the present invention represent a layer of the coating applied on the surface of glass or metal.

In an embodiment, the solutions are coatings for surfaces such as glass (any type), acrylic, metal and all types of materials.

In an embodiment, the application of the solutions on the surfaces varies between 0.5 ml to 500 ml per m², and is done by spraying, polishing, dipping or other.

In an embodiment, the composition described in the present disclosure comprises the following list of solvents: water, butylglycol, ethanol, alcohol, or mixtures thereof.

In an embodiment, the active compounds can be: siloxanes and silicones, 3-[(2-aminoethyl)amino]propyl Me, di-Me, methoxy-terminated; aqueous emulsion from 1 to 10% (w/w) of amino-polysiloxane; mixture of siloxanes and silicones, 3-[(2-aminoethyl)amino]propyl Me, di-Me, methoxy-terminated and siloxanes and silicones, 3-[(2-aminoethyl)amino]propyl Me, di-Me, hydroxy-terminated; or mixtures thereof.

In an embodiment, the composition described in the present disclosure may also comprise surfactants selected from the following list:
- Non-ionic surfactants, such as: ethoxylated fatty alcohol 7 mol of ethylene oxide (hereinafter "EO"), ethoxylated C_{9-C11} alcohol, ethoxylated C₁₀ alcohol, ethoxylated C₉₋₁₁ alcohol, ethoxylated C₉₋₁₁ alcohol (4 EO), ethoxylated C₉₋₁₁ alcohol (6 EO), ethoxylated C₉₋₁₁ alcohol (8 EO), ethoxylated C₉₋₁₁ alcohol <2.5 EO, ethoxylated C₁₆₋₁₈ alcohol, ethoxylated propoxylated C₁₂₋₁₄ alcohol, ethoxylated C₁₂₋₁₄ alcohol (1-2.5 EO), ethoxylated C₁₂₋₁₄ alcohol (1-6 EO), ethoxylated C₁₂₋₁₄ alcohol, ethoxylated C₁₂₋₁₄ alcohol (5-15 EO), ethoxylated C₁₆₋₁₈ alcohol, ethoxylated C₆₋₁₂ alcohol, ethoxylated branched C₁₁₋₁₃ alcohol, ethoxylated C₉₋₁₁ alcohol, ethoxylated alkylamide, ethoxylated alkylamine 2 EO.
- Cationic surfactants, such as: quaternary C₁₂₋₁₄ methyl chloride, ethoxylated alkylmethylamine, C₁₀₋₂₀ and C₁₆₋₁₈ fatty acids, ethoxylated quaternary coconut amine, ethoxylated quaternary C₁₂₋₁₄ alkylmethylamine, methyl chloride; quaternary ammonium compounds: (2-amino-2-oxoethyl)bis(hydroxyethyl)ethoxylated tallow alkyl, chlorides, quaternary amine compounds, quaternary amine compounds (C₁₆₋₁₈ and C₁₈-unsaturated, alkyl)trimethyl, C₁₂₋₁₆ alkyldimethylbenzyl chlorides,, C₁₀₋₁₆ benzylalkylsulfate, C₁₂₋₁₈-benzyl, alkyldimethyl, thiocyanates, benzyl-C₁₄-₁₈-alkyldimethyl, quaternary amine compounds, bis(hydrogenated tallow alkyl) dimethyl, alkylethyldimethyl, ethyl sulphates, C₁₆₋₁₈ alkyltrimethyl, C₂₀₋₂₂-alkyltrimethyl, coco alkylbis (hydroxyethyl)methyl, coco alkyltrimethyl, methyl sulphates.

In an embodiment, the methodology of the present description further comprises the following list of preservative reagents: benzalkonium chloride, didecyldimethylammonium chloride, methylisothiazolinone, isothiazolinone.

### EXAMPLES

The following examples serve to illustrate some embodiments of the present invention and are not restrictive.

All the following examples were carried out by depositing the composition described in the present disclosure on glass substrates.

In an embodiment, the parameter analysed was the angle formed by the water when in contact with the surface of glass or of a solar panel glass. This parameter is used because through this method and this technique it is possible to measure the hydrophobic effect of the coating through its contact angle, thus obtaining an angled repellence value.

In an embodiment, the application of the coatings of the present invention on other substrates is also within the application scope of the invention, namely on metal due to the formulation of the finished product. The application of the coating on metal prevents oxidation and the formation of patina on metals. Patina is a chemical substance that forms naturally, by exposure of metals to the elements and the weather.

Within the scope of the present invention, the following samples were produced, in different embodiments:

### Example 1:

In an embodiment, the composition for hydrophobic coating of surfaces comprises:
30% (w/v) of butylglycol;
30% (w/v) of siloxanes and silicones, 3-[(2-aminoethyl)amino]propyl Me, di-Me, methoxy-terminated;
2% (w/v) of ethoxylated C9-11 alcohol, preferably ethoxylated C10 alcohol;
37.8% (w/v) of water; and
0.2% (w/v) of preservative, preferably a mixture of methylisothiazolinone and isothiazolinone.

In an embodiment, the siloxanes and silicones, 3-[(2-aminoethyl)amino]propyl Me, di-Me, methoxy-terminated was added to a solution of butylglycol and the resulting solution was stirred. To this solution, still under stirring, ethoxylated C9-C11 alcohol was added, followed by the addition of water. The mixture thus obtained was stirred, followed by addition of the preservative and adjustment of the pH value with acetic acid to pH 5 to 6. Lastly, the final mixture was stirred for 15 to 20 minutes.

### Example 2

In an embodiment, the composition for hydrophobic coating of surfaces comprises:
5% (w/v) of aqueous emulsion from 1 to 10% (w/w) of amino-polysiloxane, preferably aqueous emulsion of poly(oxy-1,2-ethanediyl), alpha-isotridecyl-omega-hydroxy;
92.8% (w/v) of water
2% (w/v) of ethoxylated C9-11 alcohol, preferably ethoxylated C10 alcohol; and
0.2% (w/v) of preservative, preferably a mixture of methylisothiazolinone and isothiazolinone.

In an embodiment, 92.8% (w/v) of water was added to a solution of aqueous emulsion from 1 to 10% (w/w) of amino-polysiloxane and stirred. To the previous solution under stirring 2% (w/v) of ethoxylated C9-11 alcohol was added, preferably ethoxylated C10 alcohol, and followed by the addition of 0.2% (w/v) of preservative. The obtained mixture was stirred for 15 to 20 minutes.

### Example 3

In an embodiment, the composition for hydrophobic coating of surfaces comprises:
20% (w/v) of alcohol;
7.5% (w/v) of butylglycol;
1% (w/v) of siloxanes and silicones, 3-[(2-aminoethyl)amino]propyl Me, di-Me, methoxy-terminated;
71.3% (w/v) of water (water with pH between 4 and 5.5 adjusted with acetic acid); and
0.2% (w/v) of preservative, preferably a mixture of methylisothiazolinone and isothiazolinone.

In an embodiment, alcohol was added to a solution of butylglycol, and followed by the addition of a solution of siloxanes and silicones, 3-[(2-aminoethyl)amino]propyl Me, di-Me, methoxy-terminated. At the end, water at pH between 4 and 5.5 (adjusted with acetic acid) and the preservative were added. Finally, the solution thus obtained was stirred for 15 to 20 minutes.

### Example 4:

In an embodiment, the composition for hydrophobic coating of surfaces comprises:
20% (w/v) of alcohol;
7.5% (w/v) of butylglycol;
0.1% to 0.5% (w/v) of siloxanes and silicones, 3-[(2-aminoethyl)amino]propyl Me, di-Me;
3% to 10% (w/v) of siloxanes and silicones, 3-[(2-aminoethyl)amino]propyl Me, di-Me, hydroxy-terminated;
68.8% (w/v) of water (water with pH between 4 and 5.5 adjusted with acetic acid); and
0.2% (w/v) of preservative, preferably a mixture of methylisothiazolinone and isothiazolinone.

In an embodiment, the alcohol, butylglycol and the solutions of siloxanes and silicones, 3-[(2-aminoethyl)amino]propyl Me, di-Me, and siloxanes and silicones, 3-[(2-aminoethyl)amino]propyl Me, di-Me, hydroxy-terminated were added. At the end, water at pH between 4 and 5.5 (adjusted with acetic acid) and the preservative were added. Finally, the mixture thus obtained was stirred for 15 to 20 minutes.

### Example 5 - Comparative example:

In an embodiment, as a comparative example, a composition for hydrophobic coating of surfaces was used, comprising:
20% (w/v) of alcohol
10% (w/v) of siloxanes and silicones, 3-[(2-aminoethyl)amino]propyl Me, di-Me, hydroxy-terminated;
69.8% (w/v) of water (water with pH between 4 and 5.5 adjusted with acetic acid); and
0.2% (w/v) of preservative, preferably a mixture of methylisothiazolinone and isothiazolinone.

In an embodiment, alcohol was added to the solution of siloxanes and silicones, 3-[(2-aminoethyl)amino]propyl Me, di-Me, hydroxy-terminated. To this mixture, water at pH between 4 and 5.5 (adjusted with acetic acid) and the preservative were added. Finally, the mixture obtained was stirred for 15 to 20 minutes.

In an embodiment, the described compositions were used to coat glass substrates by manual application, preferably by pulverization (spraying) of the composition on the substrate, followed by polishing with a cloth.

In an embodiment, tests were carried out with the purpose of analysing the compositions of the present disclosure as to their durability as a coating, hydrophobicity, resistance to ultraviolet rays (UV) exposure, resistance to temperature, resistance to friction caused by sand, and resistance to deposition of paint.

In an embodiment, the durability of the composition described in the present disclosure as a coating was tested in different ways, namely by immersion in water, immersion in acid solution, immersion in alkaline solution, immersion in ionic solutions, and immersion in organic solvent.

In an embodiment of the durability test by immersion in water, a coated glass surface was exposed to different tests to measure the water resistance of the coating. The least aggressive test involved immersing the glass samples in tap water for 96 h. The tests increase in severity to entail immersion of the samples in boiling water for 5, 15 and 30 minutes.

In an embodiment of the durability test by immersion in acidic solution, the samples of glass coated with the composition of the present disclosure were immersed in diluted phosphoric acid with pH ~ 4, for 48 h. After this time, the samples were rinsed up to neutrality with water and finally air dried.

In an embodiment of the durability test by immersion in alkaline solution, the glass samples coated with the composition of the present disclosure were immersed in a solution of sodium hydroxide in water, with a pH of 8, for 48 h. After this time, the samples were rinsed to neutrality with water and finally air dried.

In an embodiment of the durability test by immersion in ionic solutions, an aqueous solution of sodium chloride at 3.5% by weight was used. The coated glass samples were immersed in the solution for 48 h, and then rinsed to neutrality with water and finally air dried.

In an embodiment of the durability test by immersion in organic solution, the glass samples coated with the composition of the present disclosure were immersed in an isopropyl alcohol solution for 30 min at room temperature and without stirring.

For the purpose and interpretation of the present disclosure, it is defined that "room temperature" should be considered as a temperature between 15-30 °C, preferably between 18-25 °C, more preferably between 20-22 °C.

In an embodiment, the temperature tolerance of the composition of the present disclosure when in the form of coating, was assessed.

In an embodiment of the high temperature tolerance test, the coated glass samples were placed in an oven, at 120 °C, for 6 h.

In an embodiment of the low temperature tolerance test, the samples were placed in a freezer, at -20 °C, for a period of 48 h.

In an embodiment, the resistance to ultraviolet rays of the composition of the present disclosure when used as a coating, was assessed.

In an embodiment, test consisted of UV light irradiation of the coated glass substrates for 8 hours, in a Vilber Lourmat^{™} ultraviolet chamber with an intensity of 7 J/(s·m2).

In an embodiment, the hydrophobicity of the coatings after the stress tests was analysed by determining the contact angle, using a goniometer of the DATAPHYSICS brand, model OCA 15PLUS. The contact angle was measured in 5 different points of each glass sample, with 3 µL water drops deposited on the glass using the sessile drop technique.

**Table 1 - Contact angle values obtained for coated glasses subjected to different stress tests.**

| | **Contact Angle (°)** | | | | | | | | | |
|---|---|---|---|---|---|---|---|---|---|---|
| **Test type** | **Example 1** | | **Example 2** | | **Example 3** | | **Example 4** | | **Example 5 (comparative)** | |
| | **Before** | **After** | **Before** | **After** | **Before** | **After** | **Before** | **After** | **Before** | **After** |
| Immersion in water | 89.2 | 94.1 | 96.8 | 105.7 | 103.7 | 101.2 | 106.0 | 106.9 | 102.8 | 93.2 |
| Immersion in acidic solution | 89.2 | 98.4 | 96.8 | 104.3 | 103.7 | 101.2 | 106.0 | 106.0 | 102.8 | 91.8 |
| Immersion in basic solution | 89.2 | 97.0 | 96.8 | 105.5 | 103.7 | 89.0 | 106.0 | 104.6 | 102.8 | 106.8 |
| Immersion in ionic solution | 89.2 | 99.0 | 96.8 | 104.2 | 103.7 | 96.9 | 106.0 | 105.6 | 102.8 | 106.8 |
| UV resistance | 89.2 | 92.8 | 96.8 | 102.2 | 103.7 | 101.3 | 106.0 | 106.6 | 102.8 | 101.9 |
| High temperature resistance | 89.2 | 94.1 | 96.8 | 105.8 | 103.7 | 105.0 | 106.0 | 106.6 | 102.8 | 103.3 |
| Low temperature resistance | 89.2 | 43.7 | 96.8 | 100.3 | 103.7 | 103.4 | 106.0 | 106.0 | 102.8 | 104.1 |
| Immersion in alcohol | 89.2 | 84.1 | 96.8 | 105.6 | 103.7 | 101.3 | 106.0 | 107.1 | 102.8 | 105.2 |

In an embodiment, the glass samples subjected to the stress tests were analysed through UV-Visible spectroscopy, using a Shimadzu spectrophotometer, model UV-2501pc, in a wavelength from 400 to 700 nm. Before carrying out the analyses, a baseline correction is performed to eliminate environmental interferences (air, equipment vibrations, etc.), that may affect the result. This correction was carried out without any glass sample on the supports, in order to simulate the condition of 100% transmittance. A film holder, appropriate for the glass samples subjected to the stress tests, was used during the analyses. The software used provides data in transmittance values.

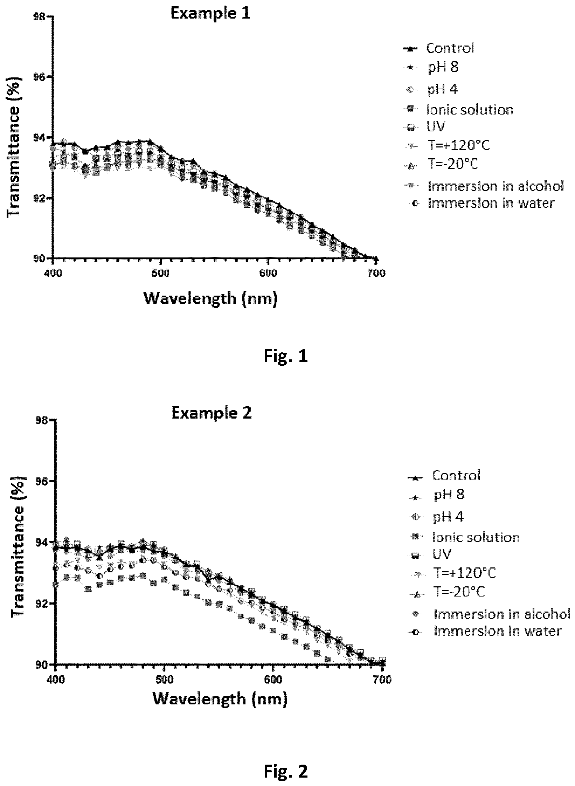

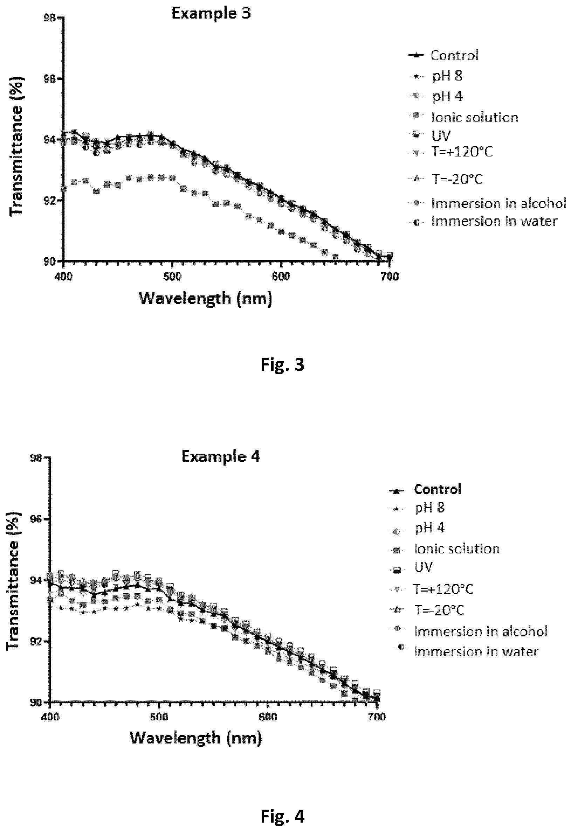

In an embodiment, the transmittance (%) of the hydrophobic coated glasses was measured after they were subjected to the different stress tests, in comparison with the coated glasses of the comparative example in Table 1. As can be seen in Figures 1-4, the glasses coated with the compositions described in Examples 1, 2, 3 or 4, have good transmittance properties.

In an embodiment, an anti-graffiti test was carried out where spray paint was applied to the glasses of the various examples (i.e., glasses coated with the compositions described in Examples 1, 2, 3 or 4, and with the composition of the comparative example). Subsequently, the behaviour of the coated glasses was observed with respect to paint adhesion, draining and ease of cleaning.

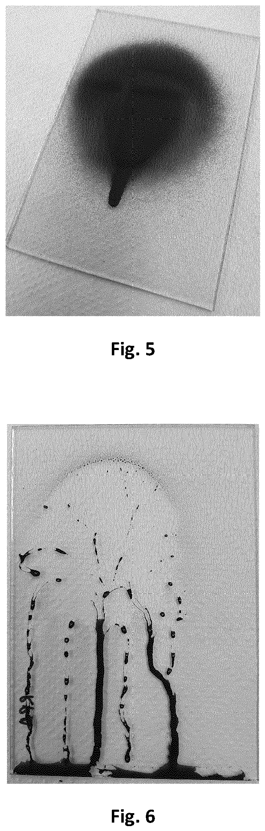

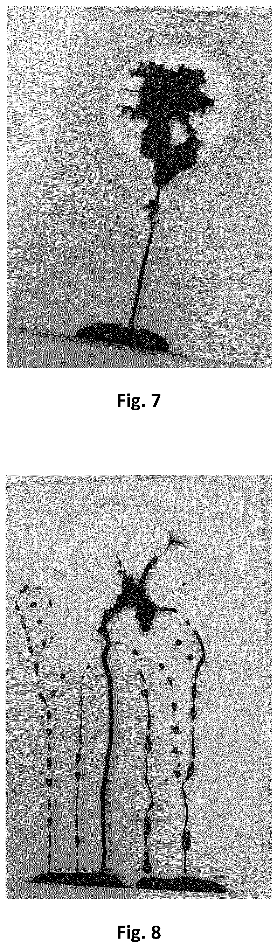

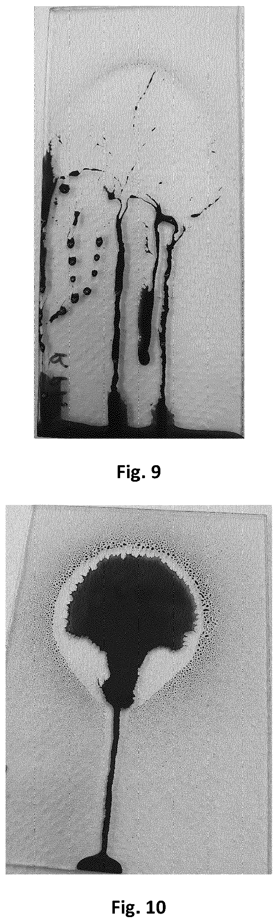

In an embodiment, it was observed that the glass without any treatment remained with the paint adhered, not being possible removing the same, even by rubbing (see figure 5). In contrast, glasses coated with the compositions described in Examples 1, 2, 3 or 4, performed better by repelling paint or preventing the adhesion of graffiti paint. All coated samples can be cleaned after dried and allow the removal of all the paint, hence the coatings of the present disclosure surprisingly have anti-graffiti properties (see Figures 6-9).

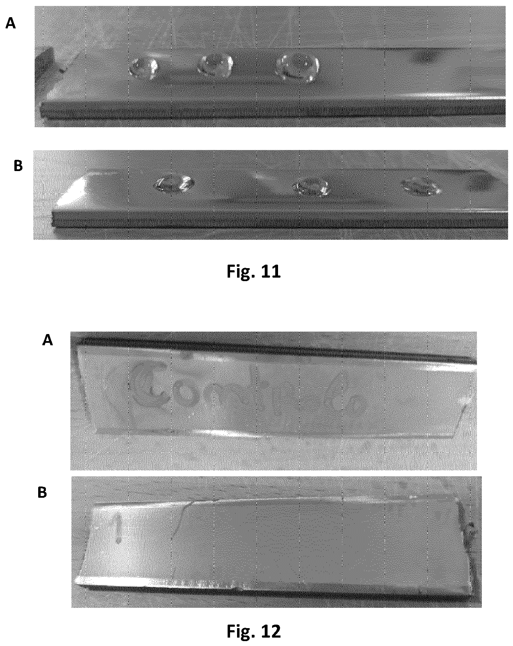

In an embodiment, a 316 stainless steel plate was coated, on one side, with the composition described in Example 4. As a control, another 316 stainless steel plate, similar to the test plate, was used without any type of coating (Figure 11). Both plates were immersed for 28 days in salt water. Examples of salt water comprise sea water, aqueous solutions with a NaCl concentration from 0.9% to 3.5% (w/w), among others.

In an embodiment, after the 28 days of immersion in salt water, it was possible to verify that the surface of the 316 stainless steel plate coated with the composition of Example 4 maintained its hydrophobic properties (Figure 11A). On the other hand, no type of hydrophobicity was observed on the surface of the control plate (Figure 11B).

In another embodiment, after the 28 days of immersion in salt water, the control plate (without coating) showed signs of rust (Figure 12A), whereas on the 316 stainless steel plate coated with Example 4, no signs of rust were observed (Figure 12B). It should also be noted that the signs of rust on the control plate were already observed after 17 days of immersion in salt water.

In an embodiment, after 6 months of immersion in salt water, particularly sea water, the control plate showed an increase in rust stains, whereas the plate coated with Example 4 continued to show no signs of rust.

In an embodiment, a 316 stainless steel plate coated with Example 4 was immersed for a total of 30 min in bleach, to evaluate the resistance of the coating composition to bleach.

In an embodiment, after 15 min of immersion the materials were removed from the bleach, washed with water and dried at room temperature. After drying, the hydrophobicity of the materials was evaluated. The 316 stainless steel plate was found to retain the hydrophobic properties conferred by the coating of Example 4, therefore it is concluded that the coating remains intact after 15 min of immersion in bleach.

In another embodiment, the coated 316 stainless steel plate was immersed for 30 min in bleach. After the 30 min, in the 316 stainless steel plate, the coating of Example 4 was intact.

In an embodiment, different types of metals were coated with Example 4 and immersed in sea water, in order to test the corrosion resistance conferred by the coating of Example 4. Preferably, copper-finished aluminium surfaces, galvanised steel surfaces, and aluminium surfaces were used.

In an embodiment, three samples of each of the tested metal surfaces were analysed: control sample, uncoated, continuously immersed in salt water for 144 h, 168 h, 216 h and 312 h (C); sample coated with Example 4 and continuously immersed in salt water for 144 h, 168 h, 216 h and 312 h (Sample 1); and a sample coated with Example 4, immersed in salt water for 144 h, 168 h, 216 h and 312 h, with 1 h of air exposure per day (Sample 2).

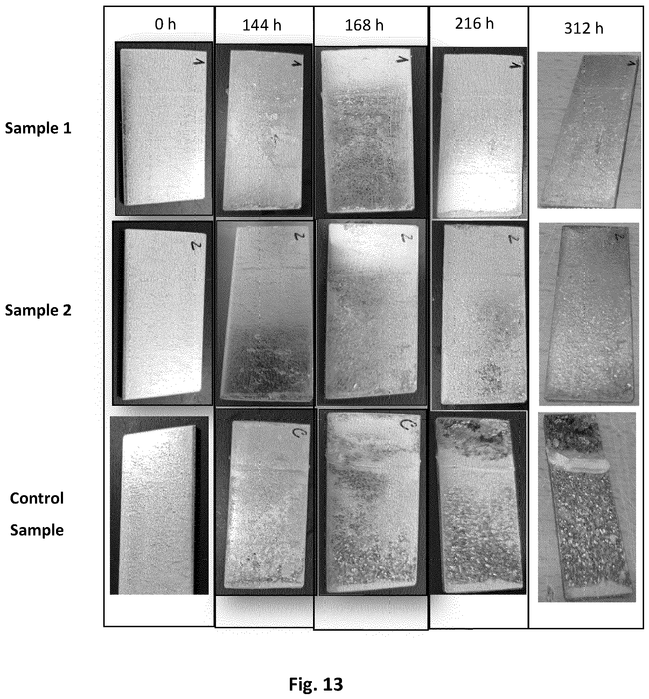

In an embodiment, for galvanised steel (Figure 13), signs of degradation were observed in all samples after 144 h of immersion in salt water (sea water). Before that, none of the samples showed signs of corrosion. Some degradation by corrosion was observed in all the samples, mainly in the lower part of the sample. The degradation was more pronounced in the control sample, where a worsening of the surface deterioration over time was observed.

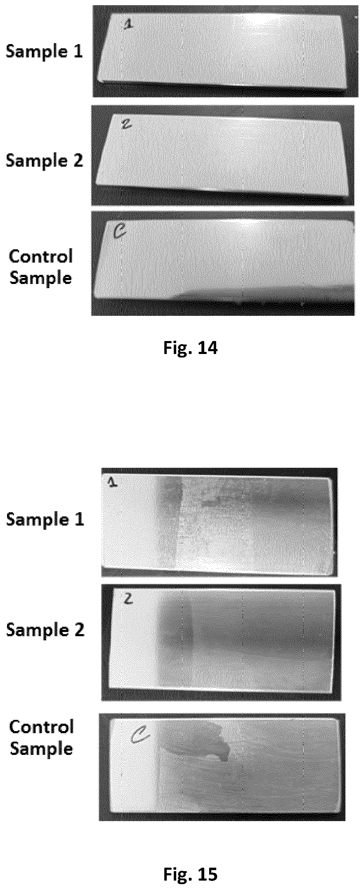

In an embodiment, for aluminium with copper finish (Figure 14), it was observed that after 240 h of exposure to salt water (sea water) the surfaces showed no signs of degradation by corrosion. After 3 months of immersion, in the same conditions, no corrosion degradation spots were observed.

In an embodiment, for aluminium (Figure 15), it was found that after 240 h of exposure to salt water (sea water) the surfaces showed no signs of degradation by corrosion. After 3 months of immersion, in the same conditions, no corrosion degradation spots were observed either.

In an embodiment, the adhesion of silicone to a surface treated with the composition of the present invention was analysed. Surface coating can damage/affect the adhesion of silicone to treated surfaces. Particularly, on glass surfaces, such as windows, it is important to confirm that the application of the coating does not compromise the application of silicone to the edges, which is important for the placement of window frames.

In an embodiment, the composition of Example 4 was manually applied to two glass surfaces. A silicone for glass sealing and bonding was then applied with a silicone gun onto the coated glass surfaces and an uncoated glass surface (control), and left to dry in the air for one day. After drying, the adhesion of the silicone to the glass was tested. In both the coated samples and the control samples, the silicone adhered to the glass surfaces, showing that the composition of the present disclosure does not affect the adhesion of silicone to glass.

The present invention is, of course, in no way restricted to the embodiments described in this document and a person with ordinary skill in the art may foresee many modifications to the same and replacements of technical features for equivalent ones, depending to the requirements of each situation, as defined in the appended claims.

The following claims further define preferred embodiments.

## Claims

1. Composition for hydrophobic coating of surfaces comprising:
a solvent selected from the following list: water, butylglycol, ethanol, alcohol, or mixtures thereof; and an active compound selected from the following list:
siloxanes and silicones, 3-[(2-aminoethyl)amino]propyl Me, di-Me, methoxy-terminated;
aqueous emulsion from 1 to 10% (w/w) of amino-polysiloxane;
a mixture of at least two of the following compounds: siloxanes and silicones, 3-[(2-aminoethyl)amino]propyl Me, di-Me, methoxy-terminated; siloxanes and silicones, 3-[(2-aminoethyl)amino]propyl Me, di-Me, hydroxy-terminated; or siloxanes and silicones, 3-[(2-aminoethyl)amino]propyl Me, di-Me;
or mixtures thereof.

2. Composition according to the previous claim comprising:
0.1 to 50 % (w/w) of active compound; preferably 1 to 50 % (w/w) of active compound, more preferably 5 to 40 % (w/w) of active compound;
40 to 99 % (w/v) of solvent, more preferably 60 to 90 % (w/v) of solvent.

3. Composition according to any one of the previous claims wherein the amino-polysiloxane is poly(oxy-1,2-ethanediyl), alpha-isotridecyl-omega-hydroxy.

4. Composition according to any one of the previous claims wherein the concentration of amino-polysiloxane in the emulsion ranges between 1 to 5% (w/w).

5. Composition according to any one of the previous claims further comprising: 1 to 10% (w/v) of a surfactant; preferably a non-ionic, cationic, or anionic surfactant, or mixtures thereof, in particular wherein the surfactant is an ethoxylated C9-11 alcohol, preferably an ethoxylated C10 alcohol.

6. Composition according to any one of the previous claims further comprising from 0.1 to 5 % (w/v) of preservative, preferably from 0.2 to 1 % (w/v) of preservative, in particular wherein the preservative is selected from the following list: benzalkonium chloride, didecyldimethylammonium chloride, methylisothiazolinone, isothiazolinone, or mixtures thereof.

7. Composition according to any one of the previous claims comprising:
10 - 40 % (w/v) of siloxanes and silicones, 3-[(2-aminoethyl)amino]propyl Me, di-Me, methoxy-terminated; preferably 10 - 30 % (w/v);
20 - 60% (w/v) of butylglycol; preferably 30 - 50% (w/v);
1 - 5 % (w/v) of ethoxylated C9-11 alcohol, preferably ethoxylated C10 alcohol; preferably 2 - 3 % (w/v);
0.1 - 2 % (w/v) of preservative; preferably 0.2 - 0.5 % (w/v); and
water up to 100% (w/v).

8. Composition according to any one of the previous claims comprising:
1 - 15 % (w/v) of aqueous emulsion from 1 to 10% (w/w) of amino-polysiloxane; preferably 5 - 10 % (w/v)
1 - 8 % (w/v) of ethoxylated C9-11 alcohol, preferably 2 - 5 % (w/v); more preferably ethoxylated C10 alcohol;
0.1 - 2 % (w/v) of preservative, preferably 0.2 - 0.5 % (w/v); and
water up to 100% (w/v).

9. Composition according to any one of the previous claims comprising:
0.5 - 10 % (w/v) of siloxanes and silicones, 3-[(2-aminoethyl)amino]propyl Me, di-Me, methoxy-terminated; preferably 1- 5 % (w/v);
10 - 30 % (w/v) of alcohol; preferably 15 - 20 % (w/v);
1 - 10 % (w/v) of butylglycol; preferably 5 - 7.5 % (w/v);
0.1 - 2 % (w/v) of preservative; preferably 0.2 - 0.5 % (w/v); and
water up to 100 % (w/v).

10. Composition according to any one of the previous claims comprising:
0.1% - 0.5% (w/v) of siloxanes and silicones, 3-[(2-aminoethyl)amino]propyl Me, di-Me;
3% - 10% (w/v) of siloxanes and silicones, 3-[(2-aminoethyl)amino]propyl Me, di-Me, hydroxy-terminated;
10 - 30 % (w/v) of alcohol; preferably 15 - 20 % (w/v);
1 - 10 % (w/v) of butylglycol; preferably 5 - 7.5 % (w/v);
0.1 - 2 % (w/v) of preservative; preferably 0.2 - 0.5 % (w/v); and
water up to 100 % (w/v).

11. Composition according to any one of the previous claims wherein the alcohol is selected from a list comprising: ethanol, 1-propanol, 2-propanol, 1-butanol, 2-butanol, isopropanol, and mixtures thereof.

12. Anti-graffiti coating, and/or anti-corrosion agent comprising the composition described in any one of the previous claims 1-11.

13. Paint comprising the composition described in any one of the previous claims 1-11.

14. Use of the composition described in any one of the previous claims as a dirt-repellent agent and/or as a hydrostatic and hydrophobic agent, and/or as an anti-graffiti agent, and/or anti-corrosion agent, and/or as a yield enhancer of a solar panel or a solar cell.

15. Articles comprising the composition described in any one of the previous claims, preferably wherein the article is made of glass, metal, acrylic or combinations thereof, more preferably wherein the article is a solar cell or a solar panel.
